# EUROPÄISCHE PATENTANMELDUNG

(11) **EP 3 450 400 A1**
(43) Veröffentlichungstag der Anmeldung: **06.03.2019**
(21) Anmeldenummer: 18191899.6
(22) Anmeldetag: 31.08.2018
(51) Int. Cl.: C02F 1/28, A01K 63/04, B01J 39/14, B01J 49/85, C02F 101/16, C02F 103/20

(54) **VORRICHTUNG ZUR STABILISIERUNG DER SALZWASSERKONZENTRATION IM BLOCK FÜR DIE AMMONIUMSTICKSTOFFENTFERNUNG AUS DEM WASCHWASSER VON ZEOLITHFILTERN**

(30) Priorität: 31.08.2017 RU 2017105869
(71) Anmelder: Kitashin, Oleg, 140003 Lubertsy (RU); Kitashin, Jurii, 140003 Lubertsy (RU); Dubrovin, Evgeny, 123056 Moskau (RU); Dubrovin, Dmitry, 140003 Lubertsy, Moskovskaya Obl (RU); Yakushev, Dmitry, 125222 Moskau (RU)
(72) Erfinder: Kitashin, Oleg, 140003 Lubertsy (RU); Kitashin, Jurii, 140003 Lubertsy (RU); Dubrovin, Evgeny, 123056 Moskau (RU); Dubrovin, Dmitry, 140003 Lubertsy, Moskovskaya Obl (RU); Yakushev, Dmitry, 125222 Moskau (RU)
(74) Vertreter: Jeck, Anton

(57) **Zusammenfassung**

Die Erfindung betrifft eine Vorrichtung zur Stabilisierung der Salzwasserkonzentration im Block für die Ammoniumstickstoffentfernung aus dem Waschwasser von Zeolithfiltern. Die Erfindung bezieht sich auf das Gebiet der Landeskultur und kann zur Verwendung in geschlossenen Wasserversorgungsanlagen, die für die Züchtung von Wasserorganismen bestimmt sind, verwendet werden.

## Beschreibung

Die Erfindung betrifft eine Vorrichtung zur Stabilisierung der Salzwasserkonzentration im Block für die Ammoniumstickstoffentfernung aus dem Waschwasser von Zeolithfiltern. Die Erfindung bezieht sich auf den Bereich der Landeskultur und kann für die Züchtung von Wasserorganismen in industriellem Umfang unter Verwendung von Anlagen mit geschlossenem Wasserkreislauf verwendet werden.

Es ist eine Vorrichtung zur Zeolithwiedergewinnung bekannt, die ein Bad für das Waschen von Zeolithgranulaten mit wässrigen Lösungen von Salzen und eine Kammer enthält. Das Bad ist mit einer Trennwand in zwei Kammern geteilt. Eine erste Kammer enthält eine Kathode für das Zeolithwaschen mit wässrigen Salzlösungen, während eine zweite Kammer eine Anode mit Wasser enthält (RF Patent 2295388, IPC B 1J 49/00, veröff. 20.03.2007, Bul. Nr. 8). Der Nachteil dieses Analogons ist die lange Dauer der Zeolithwiedergewinnung.

Dem technischen Wesen und dem erzielten Ergebnis am nächsten kommt eine Vorrichtung zur Reinigung einer Waschlösung von Ammoniumstickstoff unter Verwendung einer Salz-(NaCl)-Lösung (http://www.gaps.tstu.ru/win-1251). Sie besteht aus einem Abzweigrohr, dem biologisch behandeltes Wasser zugeführt wird, aus einem Trommelnetz, aus einem Empfangsbehälter, aus einer Pumpe, aus einer Einlaufkammer, aus Sand- und Zeolithfiltern, aus einem Mittel, dem eine Schwefelsäurelösung zugeführt wird, aus einem Kühlturm für das Ablassen und die Neutralisation von Ammoniak, aus einer Verarbeitungseinheit zur Sedimententsorgung, aus einer Einheit für den Wasserablauf in das Wasserversorgungssystem, aus einem Mischbecken, aus einem Sedimentationsbehälter für Waschwasser, aus Verschluss- und Lösungsbehältern eines Tafelsatzes, aus einem Betriebsbehälter des Tafelsatzes, aus einem Waschwasserbehälter und aus einem Betriebs- und Verschlussbehälter eines Koagulationsmittels. Diese Vorrichtung wird als Prototyp genommen. Der Nachteil der Prototypvorrichtung besteht darin, dass die Dauer des Prozesses zur Entfernung des Ammoniumstickstoffs groß ist (das Waschen dauert 5 - 7 Tage).

Die Aufgabe, für die die Schaffung der vorliegenden Vorrichtung angestrebt wird, besteht darin, die Kosten für die Aufrechterhaltung der Arbeitskapazität der Wasserkraftanlagen mit dem geschlossenen Wasserversorgungszyklus (AGW) zu verringern, indem die Rückgewinnungsrate der Zeolithfilter erhöht wird.

Das technische Ergebnis, das von der Verwendung der vorgeschlagenen Vorrichtung erwartet wird, ist die Verkürzung der Waschzeit.

Das beanspruchte technische Ergebnis wird dadurch erreicht, dass die Vorrichtung zur Stabilisierung der Konzentration von NaCI-Wasser in der Einheit zur Ammoniumstickstoffentfernung aus dem Waschwasser der Zeolithfilter eine erste Einheit für die Niveauautomatik und Programmsteuerung bildet, die einen IBM-PC-kompatiblen Computer mit einem darin installierten Programm für elektronische Datenverarbeitungsanlagen "Programm der Wasserparameterverwaltung in USV" enthält, die mit drei Informationsschalteingängen und vier Informationsschaltausgängen ausgestattet ist. Eine zweite Einheit für trockenes NaCl ist mit einem Ausgang, einem Informationsschalteingang und einem Informationsschaltausgang ausgestattet, weiter mit einem Förderer, der mit einem Eingang, einem Ausgang und einem Informationsschalteingang ausgestattet ist, mit einer Umwälzpumpe, die mit einem Eingang, einem Ausgang und einem Informationsschalteingang ausgestattet ist. Eine dritte Einheit zur Lösung des trockenen NaCl ist mit einem ersten, zweiten und dritten Eingang, mit einem ersten, zweiten und dritten Ausgang und mit einem Informationsschaltausgang ausgestattet. Ein Behälter mit Spülwasser ist mit einem Eingang, einem Ausgang und einem Informationsschaltausgang ausgestattet. Eine vierte Einheit für Wassersediment ist mit einem Eingang, einem ersten und zweiten Ausgang und einem Informationsschaltausgang ausgestattet. Eine fünfte Einheit zur Wasserableitung mit der NaCI-Konzentration mehr als 50 g/l ist mit einem Eingang, einem Ausgang und einem Informationsschalteingang ausgestattet. Eine sechste Einheit für Wassersediment ist mit einem Eingang, einem ersten und zweiten Ausgang und einem Informationsschaltausgang ausgestattet. Eine Wasserversorgungspumpe mit der NaCI-Konzentration weniger als 30 g/l ist mit einem Eingang, einem Ausgang und einem Informationsschalteingang ausgestattet. Eine siebente Einheit zur Sedimentfraktionsentfernung ist mit einem Eingang und einem Ausgang ausgestattet. Eine achte Einheit zur Sedimentfraktionsbewegung ist mit einem Eingang, einem Ausgang und einem Informationsschalteingang ausgestattet. Ein erster Verschluss ist mit einem Eingang, einem Ausgang und einem Informationsschalteingang ausgestattet. Ein zweiter Verschluss ist mit einem Eingang, einem Ausgang und einem Informationsschalteingang ausgestattet. Ein dritter Verschluss ist mit einem Eingang, einem Ausgang und einem Informationsschalteingang ausgestattet.

Dabei ist der erste Informationsschalteingang der ersten Einheit für Niveauautomatik und Programmsteuerung mit dem Informationsschaltausgang der zweiten Einheit für trockenes NaCl verbunden. Der zweite Informationsschalteingang der ersten Einheit für Niveauautomatik und Programmsteuerung ist mit den Informationsschaltausgängen der Einheit 5 zur Lösung des trockenen NaCl, der zweiten Einheit für Wassersediment 7 und der ersten Einheit für Wassersediment 9 verbunden. Der dritte Informationsschalteingang der Einheit zur Niveauautomatik und Programmsteuerung 1 ist mit dem Informationsschaltausgang des Behälters mit Waschwasser 6 verbunden. Der erste Informationsschaltausgang der ersten Einheit für Niveauautomatik und Programmsteuerung ist mit dem Informationsschalteingang der zweiten Einheit für trockenes NaCl verbunden. Der zweite Informationsschaltausgang der ersten Einheit zur Niveauautomatik und Programmsteuerung ist mit dem Informationsschalteingang des Förderers verbunden. Der dritte Informationsschaltausgang der ersten Einheit zur Niveauautomatik und Programmsteuerung ist mit den Informationsschalteingängen der Umwälzpumpe der neunten Einheit für Wassersediment, der zwölften Einheit für Sedimentfraktionsbewegung des ersten Verschlusses, des zweiten Verschlusses und des dritten Verschlusses verbunden. Der vierte Informationsschaltausgang der ersten Einheit für Niveauautomatik und Programmsteuerung ist mit den Informationsschalteingängen der achten Einheit für Wasserableitung mit der NaCI-Konzentration von mehr als 50 g/l und der Wasserversorgungspumpe mit der NaCI-Konzentration von weniger als 30 mg/l, der Ausgang der zweiten Einheit für trockenes NaCl ist mit dem Eingang des Förderers verbunden. Der Ausgang des Förderers ist mit dem zweiten Eingang der fünften Einheit zur Lösung des trockenen NaCl verbunden. Der erste Eingang der fünften Einheit zur Lösung des trockenen NaCl ist mit dem Ausgang der Umwälzpumpe verbunden, deren Eingang mit dem dritten Ausgang der fünften Einheit für Lösung des trockenen NaCl verbunden ist. Der zweite Ausgang der fünften Einheit zur Lösung des trockenen NaCl ist mit dem Eingang des dritten Verschlusses verbunden. Der erste Ausgang der fünften Einheit zur Lösung des trockenen NaCl ist mit dem Eingang der neunten Einheit für Wassersediment verbunden. Der dritte Eingang der fünften Einheit zur Lösung des trockenen NaCl ist mit dem Ausgang der Wasserversorgungspumpe mit der NaCl-Konzentration von weniger als 30 mg/l verbunden, deren Eingang mit dem Ausgang des Behälters mit dem Waschwasser verbunden ist. Der Eingang des Behälters mit Waschwasser ist mit dem Ausgang der achten Einheit für Wasserablauf mit der NaCI-Konzentration von mehr als 50 g/l verbunden. Der erste Ausgang der neunten Einheit für den Wasserablauf ist mit dem Eingang der siebenten Einheit für das Wassersediment verbunden, deren erster Ausgang mit dem Eingang des ersten Verschlusses verbunden ist, und der zweite Ausgang der siebenten Einheit für das Wassersediment ist mit dem Eingang für die Wasserableitung mit der NaCI-Konzentration von mehr als 50 mg/l verbunden. Der zweite Ausgang der neunten Einheit für das Wassersediment ist mit dem Eingang des zweiten Verschlusses verbunden. Die Ausgänge des ersten Verschlusses, des zweiten Verschlusses und des dritten Verschlusses sind mit dem Eingang der zwölften Einheit für Sedimentfraktionen verbunden, deren Ausgang mit dem Eingang der elften Einheit für die Sedimentfraktionsentfernung verbunden ist. Der Ausgang der Einheit für die Sedimentfraktionsentfernung ist auf eine Entsorgung gerichtet.

Die vorliegende Vorrichtung ist anhand der Zeichnung dargestellt. Die einzige Figur zeigt ein Blockschaltbild der Vorrichtung zur Stabilisierung der NaCI-Konzentration des Wassers in der Einheit für die Ammoniumstickstoffentfernung aus dem Waschwasser der Zeolithfilter.

Die zweite Einheit 2 für trockenes NaCl besteht aus einem Behälter (der aus Kunststoff oder rostfreiem Stahl hergestellt werden kann), aus einem Schwimmersensor des NaCI-Niveaus im Behälter (als eine Option kann der Sensor PCV 5MT/http://www.west-l.ru/ verwendet werden), aus dem Flansch zum Verbinden der Antriebsgruppe der Förderspirale des Förderers 3 und aus einer abgedichteten Abdeckung. Der Förderer 3 enthält einerseits ein Abzweigrohr des Ausgangs von NaCl und andererseits eine Antriebsgruppe der Förderspirale und einen Getriebemotor. Der flexible Körper endet mit einem Entladungsmodul mit einer installierten Lagerstütze. Das Abzweigrohr des Ausgangs von NaCl des Entladungsmoduls ist mit einem Flansch ausgestattet, der dazu dient, das Förderband mit dem Deckel der Einheit zur Lösung von NaCl zu verbinden. Ein Beispiel für die Ausführung des Förderers kann eine flexible Schnecke VK-GSH-50 AISI/http://www.tpribor.ru/ sein.

Die Umwälzpumpe 4 ist eine Anlage, die in geschlossenen Systemen betrieben wird. Ihre Pumpe und ihr Motor bilden eine Einheit ohne Gleitringdichtung; diese Rolle in der Umwälzpumpe übernehmen zwei Stopfbuchsen. Das Lagerschmiermittel ist eine gepumpte Flüssigkeit. Die Umwälzpumpe ist mit einem unteren Abzweigrohr der fünften Einheit 5 für NaCI-Lösung verbunden. Ihr Ausgang ist mit dem oberen Abzweigrohr der fünften Einheit 5 zur NaCI-Lösung verbunden. Für die Verwendung in der vorliegenden Vorrichtung kann die Umwälzpumpe Grundfos UPS Modell 25-80/http://vodofon24.ru/ benutzt werden.

Die fünfte Einheit 5 zur NaCI-Lösung enthält einen Behälter (der aus Kunststoff oder Edelstahl bestehen kann), das untere und obere Abzweigrohr mit den Flanschen für die Verbindung mit der Umwälzpumpe 4, das Abzweigrohr für die Wasserversorgung mit der Flanschanordnung der achten Einheit 8 für die Wasserversorgung mit der NaCI-Konzentration von weniger als 50 g/l, einen Überlaufzweig mit Flanschanordnung zur Verbindung mit dem Eingang der siebenten Einheit 7 für das Wassersediment und einen Sensor für das NaCI-Wasser (optional kann der Sensor Tetran 700IQ/http://www.ecoinstrument.ru/ verwendet werden). Die siebente Einheit 7 für das Wassersediment enthält einen Behälter (der aus Kunststoff oder rostfreiem Stahl hergestellt werden kann), das untere Abzweigrohr mit Flanschen zur Verbindung mit der elften Einheit 11 zur Sedimentfraktionsentfernung, das Abzweigrohr des Wassereingangs mit der NaCI-Konzentration von mehr als 50 g/l, das Überlaufrohr mit der Flanschanordnung für die Verbindung mit dem Eingang der neunten Einheit 9 für das Wassersediment und den Sedimentationssensor (als Option IFL 700/401 IQ/http://www.ecoinstrument.ru/). Die neunte Einheit 9 für das Wassersediment enthält einen Behälter (der aus Kunststoff oder Edelstahl hergestellt werden kann), das untere Abzweigrohr mit Flanschen zur Verbindung mit der elften Einheit 11 zur Sedimentfraktionsentfernung, das Abzweigrohr des Wassereingangs mit der NaCl-Konzentration von mehr als 50 g/l, das Abzweigrohr mit der Flanschanordnung zur Verbindung mit dem Eingang der achten Einheit 8 für die Wasserableitung mit der NaCI-Konzentration von mehr als 50 g/l, einen Sedimentationssensor (optional 700/401 IFL IQ/http://www.ecoinstrument.ru/), einen Sensor für den oberen Wasserstand und einen Sensor für den unteren Wasserstand (in einer der Varianten kann der Reed-Sensor http://rusautomation.ru/ verwendet werden). Die zehnte Einheit 10 zur Wasserversorgung mit einer NaCI-Konzentration von weniger als 30 g/l enthält die Tauchpumpe Typ GARDENA 4000/2 (http://www.220-volt.ru/catalog-42682), ein Rückschlagventil und ein Abzweigrohr für die Wasserversorgung der trockenen NaCI-Lösung. Die achte Einheit 8 zur Wasserableitung mit der NaCI-Konzentration von mehr als 50 g/l enthält eine Umwälzpumpe Typ Grundfos UPS 25-80 (http://vodofon24.ru/product/) und das Abzweigrohr zur Wasserableitung in die Einheit zur Ammoniumstickstoffentfernung aus dem Waschwasser der Zeolithfilter.

Die zwölfte Einheit 12 für die Sedimentfraktionsbewegung enthält eine Pumpe Typ Umwälzpumpe Grundfos UPS Modell 25-40 (http://vodofon24.ru/product) und Abzweigrohre.

Die elfte Einheit 11 zur Sedimentfraktionsentfernung enthält ein Rohrleitungsnetz zum Entfernen der Sedimentfraktionen zur Entsorgung zum Beispiel in ein Abwassersystem.

Die sechste Einheit 6 zur Ammoniumstickstoffentfernung aus dem Waschwasser der Zeolithfilter im Behälter mit Waschwasser enthält einen NaCI-Wassersensor (optional kann ein Sensor Tetran 700 IQ verwendet werden) sowie den oberen und unteren Sensor des Wasserstandes (z. B. ein Reed-Sensor).

Der erste, zweite und dritte Verschluss 13, 14, 15 sind elektromagnetische Ventile Typ BMA-01 (http://www.pulscen.ru).

Um die Tätigkeit der Wasserorganismen bei der Reinigung des Wassers in Fischbecken zu unterstützen, werden Zeolithfilter verwendet, die periodisch durch Waschen in Salzlösung wiederhergestellt werden müssen, wodurch ihre ursprüngliche Filterkapazität wiederhergestellt wird.

Das ist dadurch bedingt, das die Basis des Zeolithfilters ein geschüttetes Sorberelement, insbesondere "Clinoptilolit", bildet, das die höchste Austauschkapazität bei der Wasserentfernung von Ammoniumstickstoff gleich 5 mg pro Gramm Sorptionsmittel hat. Die Wiederherstellung der Zeolithfilter wird durch Wasser durchgeführt, das Salz (üblicherweise NaCl) bei einem erhöhten pH-Wert enthält.

Die Tabellen 1 - 3 zeigen die Abhängigkeit der Anzahl (in Prozent zu den Ausgangswerten) des entfernten Ammoniumstickstoffs aus dem Sorber der Zeolithfilter bei verschiedenen Salz- (NaCl)-Konzentrationen im Waschwasser und den pH-Wert des Waschwassers bei der Wassertemperatur von 24°C.

**Tabelle 1 pH = 10,1**

| NaCl im gepumpten Wasser, g/l | Gepumptes Wasser im Umfang des Zeolithfilters | | | | | | |
|---|---|---|---|---|---|---|---|
| | 0 | 5 | 10 | 15 | 20 | 25 | 30 |
| 30 | 0% | 14,0% | 21,2% | 28,4% | 35,6% | 42,8% | 50,0% |
| 35 | 0% | 18,5% | 26,1% | 33,7% | 41,3% | 48,9% | 56,5% |
| 40 | 0% | 25,9% | 34,3% | 42,7% | 51,1% | 59,5% | 67,9% |
| 45 | 0% | 33,3% | 43,3% | 59,0% | 71,0% | 82,4% | 84,8% |
| 50 | 0% | 36,5% | 46,7% | 62,3% | 74,2% | 85,5% | 88,2% |
| 55 | 0% | 38,6% | 50,9% | 65,2% | 76,9% | 85,7% | 89,1% |

**Tabelle 2 pH = 1,3**

| NaCl im gepumpten Wasser, g/l | Gepumptes Wasser im Umfang des Zeolithfilters | | | | | | |
|---|---|---|---|---|---|---|---|
| | 0 | 5 | 10 | 15 | 20 | 25 | 30 |
| 30 | 0% | 15,1% | 22,9% | 30,7% | 38,4% | 46,2% | 54,0% |
| 35 | 0% | 20,0% | 28,2% | 36,4% | 44,6% | 52,8% | 61,0% |
| 40 | 0% | 28,0% | 37,0% | 46,1% | 55,2% | 64,3% | 73,3% |
| 45 | 0% | 36,0% | 45,6% | 62,6% | 75,5% | 87,8% | 88,0% |
| 50 | 0% | 39,4% | 49,3% | 66,1% | 78,9% | 88,0% | 88,0% |
| 55 | 0% | 41,7% | 53,8% | 69,2% | 82,8% | 89,0% | 89,0% |

**Tabelle 3 pH = 11.8**

| NaCl im gepumpten Wasser, g/l | Gepumptes Wasser im Umfang des Zeolithfilters | | | | | | |
|---|---|---|---|---|---|---|---|
| | 0 | 5 | 10 | 15 | 20 | 25 | 30 |
| 30 | 0% | 16,3% | 24,7% | 33,1% | 41,5% | 49,9% | 58,3% |
| 35 | 0% | 21,6% | 30,4% | 39,3% | 48,2% | 57,0% | 65,9% |
| 40 | 0% | 30,2% | 40,0% | 49,8% | 59,6% | 69,4% | 79,2% |
| 45 | 0% | 37,8% | 50,2% | 68,5% | 82,5% | 89,0% | 90,1% |
| 50 | 0% | 42,6% | 66,2% | 84,4% | 87,9% | 89,2% | 90,2% |
| 55 | 0% | 45,0% | 71,0% | 87,7% | 88,2% | 88,9% | 90,5% |

Aus den Tabellen 1 - 3 ist ersichtlich, dass mit der Abnahme der Salzkonzentration (NaCl) im Waschwasser von 50 g/l auf 30 g/l die Effizienz (insbesondere die Dauer) des Waschens auf 1,5-mal sinkt. Gleichzeitig erweitert die Erhöhung des pH-Waschwassers von 10 auf 12 die Effizienz des Waschens (in Bezug auf die Verringerung der Waschzeit) auf 2 - 16 %.

Das Wasser für das Waschen der Zeolithfilter enthält der separate Behälter 6 (der als "Behälter mit Waschwasser" bezeichnet ist), wovon es auf die Zeolithfilter für Waschen (Regeneration) Letzterer zugeführt wird. Während des Waschens der Zeolithfilter mit Wasser mit darin gelöstem Salz (NaCl) sinken die Salzkonzentrationen (NaCl) in dem Waschwasser allmählich bis 70 - 75 % der optimalen Werte aufgrund der Sedimentation des Salzes (NaCl) auf dem regenerierten Sorben. Anschließend wird das Salz (NaCl) mit reinem Wasser unter Verlust eines Teils der Waschlösung während des Waschens der Zeolithfilter mit diesem Wasser ausgewaschen.

Wenn die Konzentration des Salzes (NaCl) im Waschwasser während des Waschens der Zeolithfilter nicht wiederhergestellt wird, wird sich der Regenerationsprozess durch die Zeitdauer (Durchspüleffekt sinkt) um ein Vielfaches verzögern. Dabei erreicht die Reinigungswirkung der Zeolithfilter selbst auch nicht den gewünschten Erfolg. Indirekt beeinflussen alle diese Prozesse das Volumen der gewaschenen Wasserorganismen während ihrer Zucht und erhöhen das Risiko des Todes dieser Wasserorganismen, weil eine der Hauptaufgaben bei der Arbeit der Zeolithfilter die Entfernung von Ammoniumstickstoff aus dem Wasser ist.

Die NaCI-Korrektur des Waschwassers der Zeolithfilter wird in der Regel einmal nach dem Waschzyklus der bei der Zucht der Wasserorganismen im Wasserkreislauf verwendeten Zeolithfilter durch Zugabe von 25 - 30 % NaCl vom Volumen in die Einheit für Ammoniumstickstoffentfernung aus dem Waschwasser_durchgeführt, die eine Rückgewinnung der NaCI-Konzentration im Waschwasser bis 50g/l bereitstellt.

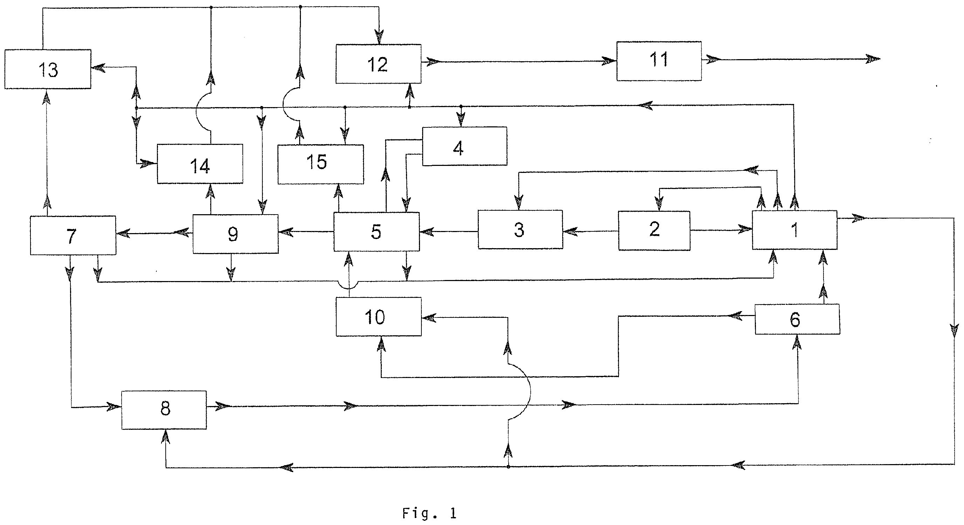

Die Vorbereitung und der Betrieb der Vorrichtung für die Stabilisierung der NaCl-Konzentration des Wassers im Block Ammoniumstickstoffentfernung aus dem Waschwasser der Zeolithfilter (Fig. 1) bestehen aus einer Reihe folgender Vorgänge:
- Vorbereitung für den Betrieb der Vorrichtung (s. Figur) in dem Teil, in dem NaCl in die zweite Einheit 2 für trockenes NaCl geladen wird.
- Während des Betriebs der Vorrichtung für die Stabilisierung der NaCl-Konzentration des Wassers wird der IBM-PC-kompatible Computer mit dem installierten Programm für elektronische Datenverarbeitungsanlagen "Programmsteuerung der Wasserparameter in USV" (Zeugnis über die staatliche Registrierung des Programms für EDV Nr. 2016660311, veröffentlicht am 2016.09.21) der ersten Einheit 1 für Niveauautomatik und Programmsteuerung aktiviert, der nach der Information über die NaCI-Konzentration im Wasser des Behälters mit dem Waschwasser 6 (Fig. 1), die in seinen dritten Informationsschalteingang vom Informationsschaltausgang des Behälters mit dem Waschwasser 6 (Fig.1) einkommt, der Information über die NaCI-Höhe im Block 2 für trockenes NaCl (Fig. 1), die in den ersten Informationsschalteingang der ersten Einheit 1 für Niveauautomatik und Programmsteuerung (Fig. 1) vom Informationsschaltausgang der zweiten Einheit 2 für trockenes NaCl einkommt, die folgenden Befehle erarbeitet/abarbeitet:
- Wenn das NaCI-Niveau in der zweiten Einheit 2 für trockenes NaCl unter dem zulässigen Wert liegt, wird ein Signal über die Notwendigkeit seiner zusätzlichen Belastung gegeben. Das untere Niveau des zulässigen trockenen NaCI-Wertes in der Einheit für trockenes NaCl 2 wird unter der Bedingung eingestellt, dass die Vorrichtung während eines Reinigungszyklus der Zeolithfilter normal funktionieren kann.
- Liegen der Wert des zulässigen trockenen NaCI-Werts über dem unteren zulässigen Wert in der zweiten Einheit 2 für trockenes NaCl und die NaCI-Konzentration im Wasser im Behälter 6 mit Waschwasser innerhalb der zulässigen Grenzen, dann wird keine Arbeit durchgeführt.
- Bei der NaCI-Konzentration des Wassers im Behälter 6 mit Waschwasser unter dem zulässigen Wert und bei einem NaCI-Wert über dem unteren zulässigen Wert in der zweiten Einheit 2 für trockenes NaCl wird die zehnte Einheit 10 für die Wasserversorgung mit der NaCI-Konzentration unter 30g/l eingeschaltet, die zehnte Einheit 10 vom Ausgang des Behälters 6 mit Waschwasser durch ihren Eingang und dann zum Ausgang das Wasser an den dritten Eingang der fünften Einheit 5 zur Lösung des trockenen NaCl zugeführt wird. Vom Ausgang der zweiten Einheit 2 für trockenes NaCl kommt trockenes NaCl in den Eingang des Förderers 3. Der Förderer 3 liefert von seinem Ausgang trockenes NaCl an den zweiten Eingang der fünften Einheit 5 zur Lösung des trockenen NaCl. Die Umwälzpumpe 4 saugt (nimmt) vom dritten Ausgang der fünften Einheit 5 zur Lösung des trockenen NaCl das Wasser mit der niedrigen NaCI-Konzentration und mit noch nicht vollständig darin gelösten NaCl-Teilchen). Dann führt die Umwälzpumpe 4 dieses Gemisch über ihren Ausgang dem ersten Eingang der fünften Einheit 5 zur Lösung des trockenen NaCl zu. Während des kontinuierlichen Pumpens des Wassers entlang des oben genannten Weges erfolgt eine intensive Mischung und Lösung von NaCl im Wasser. Im Verlauf einer solchen Mischung und Lösung wird die Information über die NaCI-Konzentration im Wasser von der fünften Einheit 5 zur Lösung des trockenen NaCl von ihrem Informationsschaltausgang kontinuierlich in den zweiten Informationsschalteingang der ersten Einheit 1 für Niveauautomatik und Programmsteuerung übertragen.
- Wenn die NaCI-Konzentration im Wasser 5 % in der fünften Einheit 5 für die Lösung des trockenen NaCl erreicht, kommt ein Befehl vom zweiten Informationsschaltausgang der ersten Einheit 1 für die Niveauautomatik und Programmsteuerung in den Informationsschalteingang des Förderers 3 ein, um sie zu halten.
- Bei der Absenkung der NaCI-Konzentration im Wasser bis zu 4,5 % in der fünften Einheit 5 zur Lösung des trockenen NaCl kommt ein Befehl vom zweiten Informationsschaltausgang der ersten Einheit 1 für Niveauautomatik und Programmsteuerung zum Informationsschalteigang des Förderers 3 über seine Einschließung in den Betrieb. Als Ergebnis wird der Prozess der Wasserversorgung mit der niedrigen NaCI-Konzentration durch die zehnte Einheit 10 für Wasserversorgung mit der NaCI-Konzentration von weniger als 30g/l fortgesetzt. Das Wasser mit der hohen NaCI-Konzentration vom ersten Ausgang der fünften Einheit 5 zur Lösung des trockenen NaCl wird dem Eingang der neunten Einheit 9 für das Wassersediment zugeführt.
- Die neunte Einheit 9 für das Wassersediment führt eine Pufferfunktion aus. Diese ist mit der Entfernung großer noch nicht in Wasser gelöster NaCl-Fraktionen sowie verschiedener Arten von Fremdkörpern (Abfällen), die im Allgemeinen in Wasser unlöslich sind, verbunden. Da das Wasser mit der hohen NaCI-Konzentration in der neunten Einheit 9 für das Wassersediment gesammelt wird, wird dieses Wasser vom ersten Ausgang dem Eingang der siebenten Einheit 7 für das Wassersediment zugeführt. In der siebenten Einheit 7 für das Wassersediment erfolgt die Sedimentation der dispersiven unterschiedlichen wasserunlöslichen Einschlüsse, die freigesetzt werden, wenn sich NaCl im Wasser löst.
- Wenn das Wasser die Ebene des höchsten Wasserstandes in der siebenten Einheit 7 für Wassersediment erreicht, kommt die diesem Ereignis entsprechende Information vom Informationsschaltausgang an den zweiten Informationsschalteingang der ersten Einheit 1 für Niveauautomatik und Programmsteuerung. Vom vierten Informationsschaltausgang der ersten Einheit 1 für Niveauautomatik und Programmsteuerung kommt ein Befehl an den Informationsschalteingang der Einheit für Wasserableitung mit einer NaCI-Konzentration von mehr als 50 g/l über die Einschaltung dieser Einheit in den Betrieb.
- Vom zweiten Ausgang der siebenten Einheit für Wassersediment kommt das Wasser mit einer hohen NaCI-Konzentration in den Eingang der achten Einheit 8 für die Wasserableitung mit einer NaCI-Konzentration von mehr als 50 g/l. Danach wird dieses Wasser vom Ausgang der achten Einheit zum Eingang des Behälters 6 mit Waschwasser geführt.
- Wenn das Wasser die untere Ebene des Wasserstands in der siebenten Einheit für das Wassersediment erreicht, wird die Information über dieses Ereignis vom Informationsschaltausgang in den zweiten Informationsschalteingang der ersten Einheit 1 für Niveauautomatik und Programmsteuerung übertragen. Als Antwort auf die empfangene Information wird ein Befehl vom vierten Informationsschaltausgang der ersten Einheit 1 für Niveauautomatik und Programmsteuerung zum Informationsschalteingang der achten Einheit 8 für Wasserableitung mit einer NaCI-Konzentration von mehr als 50 g/l über ihre Abschaltung übertragen. Vom Informationsschaltausgang des Behälters 6 mit Waschwasser kommt die Information über die NaCI-Konzentration im Wasser dieses Behälters in den dritten Informationsschalteingang der ersten Einheit 1 für die Niveauautomatik und Programmsteuerung ein.
- Beim Erreichen der vorgegebenen NaCI-Konzentration im Behälter 6 mit Waschwasser überträgt die erste Einheit 1 für Niveauautomatik und Programmsteuerung Befehle über die Abschaltung des Betriebs in den Informationsschalteingang der achten Einheit 8 für Wasserableitung mit einer NaCI-Konzentration von mehr als 50 g/l von ihrem vierten Informationsschaltausgang auf den Informationsschalteingang der zehnten Einheit 10 für Wasserversorgung mit einer NaCI-Konzentration von weniger als 30 g/l auch von seinem vierten Informationsschaltausgang und auf den Informationsschalteingang des Förderers 3 von seinem zweiten Informationsschaltausgang.
- Von den Informationsschaltausgängen der neunten Einheit 9 für das Wassersediment, der siebenten Einheit 7 für das Wassersediment und der fünften Einheit 5 zur Lösung des trockenen NaCl kommt die Information über das Sedimentniveau auf dem Boden der entsprechenden Behälter auf den zweiten Informationsschalteingang der ersten Einheit 1 für die Niveauautomatik und Programmsteuerung ein.
- Wenn der kritische Wert der oberen Ebene die Sedimentfraktionen in der neunten Einheit 9 für das Wassersediment erreicht, kommt ein Befehl vom dritten Informationsschaltausgang der ersten Einheit 1 für Niveauautomatik und Programmsteuerung an den Informationsschalteingang des zweiten Verschlusses 14 über ihre Öffnung ein. Gleichzeitig empfängt der Informationsschalteingang der zwölften Einheit 12 für Sedimentfraktionsbewegung einen Befehl über ihre Einschaltung. In diesem Fall kommen die Sedimentfraktionen vom zweiten Ausgang der neunten Einheit 9 für das Wassersediment in den Eingang des zweiten Verschlusses 14 und dann von seinem Ausgang in den Eingang der zwölften Einheit 12 für die Sedimentfraktionsbewegung. Die Betriebsabschaltung der Einheit für Sedimentfraktionsbewegung und entsprechend die Schließung des zweiten Verschlusses 14 erfolgt nach dem Befehl vom dritten Informationsschaltausgang der ersten Einheit 1 für die Niveauautomatik und Programmsteuerung, wenn der Betriebsabschaltungsbefehl auf ihre Informationsschalteingänge kommt. Die Ursache der Erarbeitung dieses Arbeitsabschaltungsbefehls ist die Information, die vom Informationsschaltausgang der neunten Einheit 9 für das Wassersediment an den zweiten Informationsschalteingang der ersten Einheit 1 für Niveauautomatik und Programmsteuerung eintrifft, über das Erreichen des unteren kritischen Werts des Sedimentfraktionsniveaus in der neunten Einheit 9 für das Wassersediment.
- Wenn der obere kritische Wert der Sedimentfraktionen in der siebenten Einheit 7 für das Wassersediment erreicht ist, kommt eine Information über dieses Ereignis vom Informationsschaltausgang auf den zweiten Informationsschalteingang der ersten Einheit 1 für die Niveauautomatik und Programmsteuerung. Als Antwort kommt ein Befehl vom dritten Informationsschaltausgang der ersten Einheit 1 für die Niveauautomatik und Programmsteuerung auf den Informationsschalteingang des zweiten Verschlusses 13 über seine Öffnung ein, der auf die Informationsschalteinheit für die Sedimentfraktionsbewegung (12) verdoppelt wird, um Letzteren einzuschalten. Dabei kommen die Sedimentfraktionen aus dem Ausgang der siebenten Einheit 7 für Wassersediment in den Eingang des ersten Verschlusses 13 ein. Danach kommen die Sedimentfraktionen von seinem Ausgang in den Eingang der zwölften Einheit 12 für die Sedimentfraktionsbewegung. Die Abschaltung der zwölften Einheit für die Sedimentfraktionsbewegung und die Schließung des ersten Verschlusses 13 erfolgt auf Befehl des dritten Ausgangs der ersten Einheit 1 für die Niveauautomatik und Programmsteuerung, der auf den Informationsschalteingang der zwölften Einheit für die Sedimentfraktionsbewegung und auf den Informationenschalteingang des ersten Verschlusses 13 einkommt wegen der Erhaltung der Information durch die Einheit für die Niveauautomatik und Programmsteuerung auf ihren zweiten Informationsschalteingang über das Erreichen des unteren kritischen Werts des Sedimentfraktionsniveaus in der siebenten Einheit 7 für Wassersediment.
- Beim Erreichen des kritischen oberen Werts des Sedimentfraktionsniveaus in der fünften Einheit 5 für die Lösung des trockenen NaCl kommt ein Befehl über ihre Öffnung vom dritten Informationsschaltausgang der ersten Einheit 1 für die Niveauautomatik und Programmsteuerung auf den Informationsschalteingang des dritten Verschlusses 15 und entsprechend auf den Informationsschalteingang der zwölften Eingang 12 für die Sedimentfraktionsbewegung über seine Betriebseinschaltung. Dabei kommen die Sedimentfraktionen vom zweiten Ausgang der fünften Einheit 5 zur Lösung des trockenen NaCl in den Eingang des dritten Verschlusses 15 ein. Danach bewegen sie sich von seinem Ausgang zum Eingang der zwölften Einheit 12 für Sedimentfraktionsbewegung. Die Betriebsabschaltung der zwölften Einheit 12 für die Sedimentfraktionsbewegung und die Schließung des dritten Verschlusses 15 erfolgen nach Erhalt der entsprechenden Befehle an ihre Informationsschalteingänge vom dritten Informationsschaltausgang über die Betriebsabschaltung auf der Grundlage der Informationen über das Erreichen des kritischen unteren Werts des Sedimentfraktionsniveaus in der fünften Einheit 5 zur Lösung des trockenen NaCl.
- Im Fall des Erreichens des kritischen oberen Werts des Sedimentfraktionsniveaus wird in der neunten Einheit 9 für das Wassersediment und in der siebenten Einheit 7 für das Wassersediment und auch in der fünften Einheit 5 zur Lösung des trockenen NaCl gleichzeitig die Reinigungsvorrichtung für die Sedimentfraktion in der folgenden Reihenfolge betätigt: Zuerst wird die siebente Einheit 7 für das Wassersediment gereinigt, dann die neunte Einheit 9 für das Wassersediment und schließlich die fünfte Einheit 5 zur Lösung des trockenen NaCl. Wenn die vorgeschlagene Vorrichtung von Sedimentfraktionen gereinigt wird, kommen die letzten aus dem Ausgang der zwölften Einheit 12 für die Sedimentfraktionsbewegung an den Eingang der elften Einheit 11 für die Sedimentfraktionsentfernung ein. Dann werden sie von ihrem Ausgang der Entsorgung zugeführt.

### Beispiel 1

In zehn Becken des Behälters 6 mit Waschwasser, die für die Zucht von Wasserorganismen in der AGW bestimmt sind, gibt es 80.000 kg sibirischen Stör. Im Durchschnitt enthält jedes Becken des Behälters 6 mit Waschwasser 8000 kg sibirischen Stör. Jedes Becken des Behälters 6 mit Waschwasser ist mit einem Zeolithfilter mit einer Füllung von etwa 200 kg Klinoptilolith ausgestattet. Die oben genannten Wasserorganismen sondern täglich Ammoniumstickstoff (etwa 0,1 g/kg Fisch pro Tag) ab, d. h. etwa 800 Gramm Ammoniumstickstoff pro Tag. Die potentielle Filterkapazität des Zeolithfilters (mit der Beladung des zuvor erwähnten 200 kg Klinoptiloliths) zur Adsorption von Ammoniumstickstoff beträgt 1000 g. Die berechnete Zeit für die Wiederherstellung der Zeolithfilter beträgt 10 Tage. Jedes Becken des Behälters 6 mit Waschwasser ist mit 120 m³ Wasser gefüllt. Die Wassertemperatur im Behälter 6 mit Waschwasser wird auf etwa 24°C gehalten, und der pH-Wert darin beträgt 11,1. Die Salzkonzentration (NaCl) im Wasser betrug 42 g/l, die Ammoniumstickstoffkonzentration im Waschwasser betrug 0,2 mg/l. In der zweiten Einheit 2 für trockenes NaCl befinden sich 1.200 kg geschüttetes trockenes NaCl. Nach Aufnahme des gesamten absorbierten Ammoniumstickstoffs in Zeolithfiltern für 10 Tage der Zucht von sibirischem Stör stieg die Konzentration von Ammoniumstickstoff im Waschwasser der Zeolithfilter auf 670 mg/l an. Das Waschen der Zeolithfilter wird mit einer Geschwindigkeit von 2 m³/min mit dem Wasser, das der Behälter 6 mit Waschwasser enthält, durchgeführt. Das Waschen der Zeolithfilter in allen Becken des Behälters 6 mit Waschwasser der beanspruchten Vorrichtung wurde gleichzeitig durchgeführt. In dem Fall, wenn das NaCl-Niveau im Wasser im Behälter 6 mit Waschwasser unter den kritischen Wert des Wasserstands absinkt, ist das NaCl-Niveau in der zweiten Einheit 2 für trockenes NaCl höher als der untere zulässige Wert. Dann schaltet sich die zehnte Einheit 10 für die Wasserversorgung mit einer NaCI-Konzentration von weniger als 30 g/l in den Betrieb ein, der vom Ausgang des Behälters 6 mit Waschwasser durch seinen Eingang und dann seinen Ausgang beginnt, Wasser zum dritten Eingang der fünften Einheit 5 zur Lösung des trockenen NaCl zuzuführen. Aus dem Ausgang der zweiten Einheit 2 für trockenes NaCl wird trockenes NaCl zum Eingang des Förderers 3 übertragen, der trockenes NaCl von seinem Ausgang auf den zweiten Eingang der fünften Einheit 5 zur Lösung des trockenen NaCl liefert. Die Umwälzpumpe 4 vom dritten Ausgang der fünften Einheit 5 zur Lösung des trockenen NaCl nimmt durch ihren Eingang das Wasser mit einer niedrigen NaCI-Konzentration und noch ungelösten NaCl-Teilchen auf. Weiter liefert die Umwälzpumpe 4 durch ihren Ausgang diese Mischung aus Wasser und NaCl zum ersten Eingang der Einheit zur Lösung des trockenen NaCl. Beim Prozess des ständigen Pumpens, der mit intensivem Mischen durch die Umwälzpumpe 4 des Wassers mit NaCl begleitet wird, erfolgt die Beschleunigung der Lösung von NaCl im gepumpten Wasser. Im Zuge des Prozessablaufs dieses Mischens kommt eine Information über die aktuelle NaCl-Konzentration im Wasser vom Informationsschaltausgang der fünften Einheit 5 zur Lösung des trockenen NaCl zum zweiten Informationsschalteingang der ersten Einheit 1 für die Niveauautomatik und Programmsteuerung ein. Beim Erreichen einer NaCI-Konzentration im Wasser von 5 % in der fünften Einheit 5 zur Lösung des trockenen NaCl wird ein Befehl an den Informationsschalteingang des Förderers 3 über sein Halten übertragen. Wenn die NaCI-Konzentration im Wasser bis zu 4,5 % in der fünften Einheit 5 zur Lösung des trockenen NaCl reduziert wird, kommt an den Informationsschalteingang des Förderers 3 ein Befehl über sein Betriebseinschalten ein. In diesem Fall wird der Prozess der Wasserversorgung mit einer niedrigen NaCl-Konzentration durch die zehnte Einheit 10 für die Wasserversorgung mit einer NaCl-Konzentration von weniger als 30 g/l fortgesetzt. Das Wasser mit der hohen NaCl-Konzentration vom ersten Ausgang der fünften Einheit 5 zur Lösung des trockenen NaCl kommt in den Eingang der neunten Einheit 9 für das Wassersediment ein. Die neunte Einheit 9 für das Wassersediment führt eine Pufferfunktion durch, um große NaCl-Fraktionen zu entfernen, die sich nicht in Wasser und fremden unlöslichen Verunreinigungen gelöst haben. Da das Wasser mit der hohen NaCI-Konzentration in der neunten Einheit 9 für das Wassersediment gesammelt wird, kommt das oben genannte Wasser vom ersten Ausgang in den Eingang der siebenten Einheit 7 für das Wassersediment ein. In der siebenten Einheit 7 für das Wassersediment erfolgt die weitere Sedimentation der (nicht gelösten) NaCI-Dispersionsteilchen. Wenn das Wasser die höchste Ebene des Wasserstands in der siebenten Einheit 7 für das Wassersediment erreicht, kommt eine Information über dieses Ereignis vom Informationsschaltausgang auf den zweiten Informationsschalteingang der ersten Einheit 1 für die Niveauautomatik und Programmsteuerung. Sie überträgt ihrerseits einen Befehl an den Informationsschalteingang der Einheit für Wasserableitung mit einer NaCI-Konzentration von mehr als 50 g/l über die Einschaltung der achten Einheit 8 für die Wasserableitung mit einer NaCI-Konzentration von mehr als 50 g/l. Vom zweiten Ausgang der siebten Einheit 7 für das Wassersediment wird das Wasser mit einer hohen NaCI-Konzentration zum Eingang der achten Einheit 8 für die Wasserableitung mit einer NaCl- Konzentration von mehr als 50 g/l geführt. Weiter wird das Wasser vom Ausgang der achten Einheit 8 für die Wasserableitung mit einer NaCl-Konzentration von mehr als 50 g/l zum Eingang des Behälters 6 mit Waschwasser geführt. Wenn das oben genannte Wasser die untere Ebene des Wasserstands in der siebenten Einheit 7 für das Wassersediment erreicht, wird eine entsprechende Information über dieses Ereignis von ihrem Informationsschaltausgang zum zweiten Informationsschalteingang der ersten Einheit 1 für die Niveauautomatik und Programmsteuerung übertragen. Ihrerseits überträgt diese Einheit von ihrem vierten Informationsschalteingang einen Befehl über ihre Abschaltung auf den Informationsschalteingang der achten Einheit 8 für die Wasserableitung mit einer NaCl-Konzentration von mehr als 50 g/l. Vom Informationsschaltausgang des Behälters 6 mit Waschwasser kommt die Information über die NaCI-Konzentration in dem darin befindlichen Wasser zum dritten Informationsschalteingang der ersten Einheit 1 für die Niveauautomatik und Programmsteuerung. Beim Erreichen des Sollwerts der NaCI-Konzentration im Wasser des Behälters 6 mit dem Waschwasser kommt eine Information über dieses Ereignis von seinem Informationsschaltausgang auf den dritten Informationsschalteingang der ersten Einheit 1 für die Niveauautomatik und Programmsteuerung. Dabei wird ein Befehl vom vierten Informationsschaltausgang der ersten Einheit 1 für die Niveauautomatik und Programmsteuerung zum Informationsschalteingang der achten Einheit 8 für die Wasserableitung mit einer NaCl-Konzentration von mehr als 50 g/l und der zehnten Einheit 10 für die Wasserversorgung mit einer NaCI-Konzentration von weniger als 30 g/l vom zweiten Informationsschaltausgang der ersten Einheit 1 für die Niveauautomatik und Programmsteuerung zum Informationsschalteingang des Förderers 3 über das Halten ihres Betriebs übertragen. Die Unterstützung der notwendigen NaCI-Konzentration im Waschwasser während der Wiederherstellung der Zeolithfilter fördert eine wesentliche Verringerung der Waschzeit (d. h. erhöht das Zeitintervall für ihre Wartung).

Letzteres wird durch die Daten der Vergleichstests mit der Prototypvorrichtung bestätigt, die in der Tabelle 4 dargestellt sind.

**Tabelle 4**

| Nr. | Vorrichtungsbenennung | Umfang des Waschwassers, m³ | Konzentration von Ammoniumstickstoff im Wasser der Einheit für Ammoniumstickstoffentfernung, mg/Liter | | | | | |
|---|---|---|---|---|---|---|---|---|
| | | | 6 Min. | 12 Min. | 18 Min. | 24 Min. | 30 Min. | 36 Min. |
| 1 | vorgeschlagene Vorrichtung | 120 | 243 | 495 | 582 | 583 | 583 | 583 |
| 2 | Prototypvorrichtung | 120 | 243 | 289 | 320 | 326 | 340 | 354 |

Wie aus den in der Tabelle 4 dargestellten Ergebnissen der Vergleichstests der vorgeschlagenen Vorrichtung mit der Prototypvorrichtung hervorgeht, gewährleistet die vorgeschlagene Vorrichtung das Erreichen des technischen Ergebnisses, und zwar eine Beschleunigung von 36 Minuten durch die vorliegende Vorrichtung aus Zeolith. Die Menge des Ammoniumstickstoffs beträgt 1,65mal der für dieselbe Zeit im Prototypgerät geltenden Menge des Ammoniumstickstoffs (bei gleichem Umfang des Waschwassers).

### Beispiel 2

In zwei Becken des Behälters 6 mit Waschwasser, die zur Zucht von Wasserorganismen bestimmt sind, befinden sich 20.000 kg Forellen. Dementsprechend enthält jedes der beiden Becken des Behälters mit Waschwasser durchschnittlich 10.000 kg Forellen. Beide Becken des Behälters 6 mit Waschwasser sind mit Zeolithfiltern mit jeweils 3000 kg Klinoptilolith ausgestattet. Die in den Becken enthaltenen Forellen sondern in das Wasser täglich Ammoniakstickstoff in einer Menge von 0,2 g pro 1 kg Forelle pro Tag (d. h. 100 g Ammoniumstickstoff pro Tag) in jedem der beiden Becken des Behälters 6 mit Waschwasser ab.

Die potenzielle Möglichkeit des Zeolithfilters mit den oben genannten Gewichtsparametern, Ammoniumstickstoff aus dem Wasser zu absorbieren, beträgt 15.000 g. Die berechnete Zeit für die Wiederherstellung der gebrauchten Zeolithfilter beträgt 7 Tage. Die in diesem Beispiel verwendeten Becken des Behälters 6 mit Waschwasser enthalten etwa 40 m³ Wasser. Die Wassertemperatur in beiden Becken des Behälters 6 mit Waschwasser wurde auf etwa 20°C eingestellt. Der pH-Wert wurde auf etwa 11,8, die NaCI-Konzentration auf 42 g/l und die Ammoniumstickstoffkonzentration auf einen Wert von 0,4 mg/l eingestellt. Die zweite Einheit 2 für trockenes NaCl wurde mit 1800 kg geschüttetem trockenen NaCl beladen. Bei der Lösung des gesamten adsorbierten Ammoniumstickstoffs in Zeolithfiltern für sieben Tage der Forellenzucht erreichte die Ammoniumstickstoffkonzentration im Waschwasser der Zeolithfilter 750 mg/l. Das Waschen der Zeolithfilter wurde mit einer Geschwindigkeit von 4 m³/min mit dem Waschwasser vom Behälter 6 mit Waschwasser durchgeführt. Das Waschen der Zeolithfilter wurde nacheinander durchgeführt, zuerst im ersten Becken und dann im zweiten Becken. In dem Fall, wenn die NaCI-Konzentration im Wasser im Behälter 6 mit Waschwasser niedriger als der kritische Wert wurde und der NaCl-Wert in der zweiten Einheit 2 für trockenes NaCl über dem unteren zulässigen Wert lag, schaltet die zehnte Einheit 10 für die Wasserversorgung mit einer NaCl-Konzentration von weniger als 30 g/l ein. Vom Ausgang des Behälters 6 mit Waschwasser beginnt die Zufuhr des Wassers zum Eingang der Wasserversorgungspumpe mit der NaCI-Konzentration von weniger als 30 g/l. Danach gelangt dieses Wasser von ihrem Ausgang zum dritten Eingang der fünften Einheit 5 zur Lösung des trockenen NaCl. Vom Ausgang der zweiten Einheit 2 für trockenes NaCl wird trockenes NaCl dem Eingang des Förderers 3 zugeführt. Weiter wird trockenes NaCl vom Ausgang des Förderers 3 dem Eingang der fünften Einheit zur Lösung des trockenen NaCl zugeführt. Die Umwälzpumpe 4 saugt vom ersten Ausgang der fünften Einheit 5 zur Lösung des trockenen NaCl durch ihren Eingang das Wasser mit einer niedrigen NaCI-Konzentration und darin enthaltene noch nicht gelöste NaCl-Teilchen. Dann führt die Umwälzpumpe durch ihren Ausgang diese Mischung zum dritten Eingang der fünften Einheit 5 zur Lösung des trockenen NaCl zurück. Während des kontinuierlichen Wasserpumpens erfolgt eine intensive Lösung der noch nicht gelösten im umgepumpten Wasser enthaltenen NaCl-Teilchen. Im Zuge eines solchen Pumpens (das mit intensivem Mischen und gleichzeitiger Lösung von NaCl im gepumpten Wasser begleitet wird) wird die Information über die NaCI-Konzentration im Wasser ständig vom Informationsschaltausgang der fünften Einheit 5 zur Lösung des trockenen NaCl zum zweiten Informationsschalteingang der ersten Einheit 1 für die Niveauautomatik und Programmsteuerung übertragen. Wenn die NaCI-Konzentration im Wasser der fünften Einheit 5 zur Lösung des trockenen NaCl den Wert 5% erreicht, kommt ein Befehl an den Informationsschalteingang des Förderers 3 vom zweiten Informationsschaltausgang der ersten Einheit 1 für die Niveauautomatik und Programmsteuerung über ihre Abschaltung ein. Im Falle der Absenkung der NaCl-Konzentration im Wasser bis zu 4,5% in der fünften Einheit zur Lösung des trockenen NaCl kommt ein Befehl vom zweiten Informationsschaltausgang der ersten Einheit 1 für die Niveauautomatik und Programmsteuerung zum Informationsschalteingang des Förderers 3 über ihre Betriebseinschaltung ein. In diesem Fall wird der Prozess der Wasserversorgung mit der niedrigen NaCI-Konzentration durch die zehnte Einheit 10 der Wasserversorgung mit einer NaCI-Konzentration von weniger als 30 g/l fortgesetzt. Das Wasser mit der hohen NaCI-Konzentration wird vom ersten Ausgang der fünften Einheit 5 zur Lösung des trockenen NaCl dem Eingang der neunten Einheit 9 für das Wassersediment zugeführt. Die neunte Einheit 9 für das Wassersediment führt eine Pufferfunktion durch, um große NaCl-Fraktionen, die noch nicht im Wasser gelöst sind, und andere wasserunlösliche Fremdkörper zu entfernen. Da das Wasser mit der hohen NaCI-Konzentration in der neunten Einheit für das Wassersediment angesammelt wird, kommt dieses Wasser von ihrem ersten Ausgang in den Eingang der siebenten Einheit 7 für das Wassersediment. In der siebenten Einheit 7 für das Wassersediment erfolgt die Sedimentation der Dispersionseinschlüsse von gelöstem NaCl sowie den wasserunlöslichen Fremdkörpern. Wenn das oben genannte Wasser die höchste Ebene des Wasserstands in der siebenten Einheit 7 für das Wassersediment erreicht, kommt eine Information über dieses Ereignis von ihrem Informationsschaltausgang zum zweiten Informationsschalteingang der ersten Einheit 1 für die Niveauautomatik und Programmsteuerung. Danach wird ein Befehl vom vierten Informationsschaltausgang der ersten Einheit 1 für die Niveauautomatik und Programmsteuerung zum Eingang der achten Einheit 8 für die Wasserableitung mit einer NaCI-Konzentration von mehr als 50 g/l über ihre Einschaltung übertragen. Vom zweiten Ausgang der siebenten Einheit 7 für das Wassersediment kommt das Wasser mit einer hohen NaCI-Konzentration in den Eingang der achten Einheit 8 für die Wasserableitung mit einer NaCI-Konzentration von mehr als 50 g/l. Weiter wird von ihrem Ausgang dieses Wasser dem Eingang der Behälter 6 mit Waschwasser zugeführt. Beim Erreichen der unteren Ebene des Wasserstands in der siebenten Einheit 7 für das Wassersediment wird von ihrem Informationsschaltausgang die Information über dieses Ereignis auf den zweiten Informationsschalteingang der ersten Einheit 1 für die Niveauautomatik und Programmsteuerung übertragen. Als Antwort kommt von ihrem vierten Informationsschaltausgang ein Befehl an den Informationsschalteingang der achten Einheit 8 der Wasserableitung mit einer NaCI-Konzentration von mehr als 42 g/l über ihre Abschaltung. Informationen über die NaCI-Konzentration im Wasser des Behälters 6 mit dem Waschwasser werden kontinuierlich auf den dritten Informationsschalteingang der ersten Einheit 1 für die Niveauautomatik und Programmsteuerung übertragen. Beim Erreichen des Sollwerts der NaCI-Konzentration in den Behältern 6 mit Waschwasser kommt ein Befehl vom Informationsschaltausgang der ersten Einheit 1 für die Niveauautomatik und Programmsteuerung an die Informationsschalteingänge der Einheiten 8 für Wasserableitung mit einer NaCI-Konzentration von mehr als 50 g/l, der zehnten Einheit 10 für die Wasserversorgung mit einer NaCI-Konzentrationen von weniger als 30 g/l und auch vom zweiten Informationsschaltausgang der ersten Einheit 1 für die Niveauautomatik und Programmsteuerung an den Informationsschalteingang des Förderers 3 über ihr Betriebshalten.

Die Unterstützung der notwendigen NaCI-Konzentration im Waschwasser während der Wiederherstellung der Zeolithfilter fördert die Verringerung der Waschzeit und erhöht das Zeitintervall für die Instandhaltung, das durch Vergleichstests mit der Prototypvorrichtung bestätigt wird, die in der Tabelle 5 gezeigt sind.

**Tabelle 5**

| Nr. | Vorrichtungsbenennung | Umfang Waschwassers, m³ | des Ammoniumstickstoffkonzentration im Wasser der Einheit für Ammoniumstickstoffentfernung, mg/l | | | | | |
|---|---|---|---|---|---|---|---|---|
| | | | 6 Min. | 12 Min. | 18 Min. | 24 Min. | 30 Min. | 36 Min. |
| 1 | vorgeschlagene Vorrichtung | 40 | 296 | 360 | 380 | 656 | 673 | 674 |
| 2 | Prototypvorri chtung | 40 | 296 | 302 | 304 | 372 | 384 | 391 |

Wie aus den Ergebnissen der Vergleichstests der vorgeschlagenen Vorrichtung mit der Prototypvorrichtung hervorgeht, die in der Tabelle 5 dargestellt sind, gewährleistet die vorgeschlagene Vorrichtung das Erreichen des technischen Ergebnisses. In der beantragten Vorrichtung ist die aus Zeolith ausgefallene Menge Ammoniumstickstoff in 36 Minuten 1,72mal größer als die für die gleiche Zeit in der Prototypvorrichtung geltende Menge des Ammoniumstickstoffs (mit dem gleichen Umfang des Waschwassers).

### Beispiel 3

In sechs Becken des Behälters 6 mit Waschwasser befinden sich 36.000 kg Sterlett. Folglich enthält jedes Becken durchschnittlich etwa 6000 kg Sterlett. Jedes der Becken des Behälters 6 mit Waschwasser hat seinen eigenen Zeolithfilter mit einer Ladung von 1000 kg Klinoptilolith. Der enthaltene Sterlett sondert täglich in das Wasser jedes Beckens des Behälters 6 mit Waschwasser einen Ammoniumstickstoff von 0,15 g/kg des Sterlettgewichts ab, d. h. etwa 900 g Ammoniumstickstoff.

Die potenzielle Möglichkeit des gebrauchten Zeolithfilters, Ammoniumstickstoff aus dem Wasser zu aborbieren, beträgt 5.000 g. Die berechnete Zeit für die Wiederherstellung der oben genannten Zeolithfilter beträgt 4 Tage. Der Behälter mit Waschwasser enthält 60 m³ Waschwasser. In diesem Behälter betrug die Wassertemperatur etwa 25°C und der pH-Wert 10,7. Die NaCI-Konzentration im Wasser betrug 42 g/l, und die Konzentration des Ammoniumstickstoffs wurde mit 0,5 mg/l aufgezeichnet. In der zweiten Einheit 2 für trockenes NaCl befanden sich 1400 kg geschüttetes trockenes NaCl. Bei der Lösung des gesamten adsorbierten Ammoniumstickstoffes in Zeolithfiltern innerhalb von 4 Tagen nach dem Sterlettwaschen beträgt die Ammoniumstickstoffkonzentration im Waschwasser 500 mg/l. Das Waschen der Zeolithfilter wird mit einer Geschwindigkeit von 2 m³/min mit Waschwasser durchgeführt, das sich im Behälter 6 mit Waschwasser befindet. Das Waschen wird in zwei Stufen durchgeführt. Zuerst wurden vier Zeolithfilter (die sich in vier Becken befinden) gleichzeitig bearbeitet. Danach wurde das Waschen der zwei verbliebenen Zeolithfilter (in den verbliebenen zwei Becken) ebenfalls gleichzeitig durchgeführt.

In dem Fall, wenn die NaCI-Konzentration im Wasser des Behälters 6 mit Waschwasser unterhalb des Grenzwerts lag und das NaCl-Niveau in der zweiten Einheit 2 für trockenes NaCl über dem zulässigen Wert, wurde die zehnte Einheit 10 für die Wasserversorgung mit einer NaCI-Konzentration von weniger als 30 g/l eingeschaltet, die vom Ausgang des Behälters 6 mit Waschwasser das Wasser auf/zu ihrem Eingang erhält und dann dieses Wasser durch seinen Ausgang zum dritten Eingang der fünften Einheit 5 zur Lösung des trockenen NaCl zuführt. Vom Ausgang der zweiten Einheit 2 für trockenes NaCl wird trockenes NaCl dem Eingang des Förderers 3 zugeführt. Seinerseits liefert der Förderer 3 dieses trockene NaCl von seinem Ausgang an den zweiten Eingang der fünften Einheit 5 zur Lösung des trockenen NaCl. Zu diesem Zeitpunkt nimmt die Umwälzpumpe 4 vom dritten Ausgang der fünften Einheit 5 für trockenes NaCl durch ihren Eingang das Wasser mit einer niedrigen NaCI-Konzentration und mit noch nicht gelösten NaCl-Teilchen auf. Weiter liefert die Umwälzpumpe durch ihren Ausgang die oben genannte Salzlake zum ersten Eingang der fünften Einheit 5 zur Lösung des trockenen NaCl. Während des kontinuierlichen Wasserpumpens erfolgt eine intensive Lösung von NaCl im Wasser. Im Zuge des oben genannten Pumpens, das mit einer intensiven Lösung von NaCl im Wasser begleitet wird, kommt ständig eine Information der fünften Einheit 5 für die Lösung des trockenen NaCl über die NaCI-Konzentration im Wasser von ihrem Informationsschaltausgang zum zweiten Informationsschalteingang der ersten Einheit 1 für die Niveauautomatik und Programmsteuerung. Beim Erreichen der NaCI-Konzentration von 5% im Wasser der fünften Einheit 5 zur Lösung des trockenen NaCl kommt ein Befehl vom zweiten Informationsschaltausgang der ersten Einheit 1 für die Niveauautomatik und Programmsteuerung zum Informationsschalteingang des Förderers 3 über das Halten des Letzteren. Bei der Verringerung der NaCI-Konzentration im Wasser der fünften Einheit 5 zur Lösung des trockenen NaCl bis zu 4,5 % kommt ein Befehl vom zweiten Informationsschaltausgang der ersten Einheit 1 für die Automatisierung und Programmsteuerung zum Informationsschalteingang des Förderers 3 über seine Betriebseinschaltung. In diesem Fall wird der Prozess der Wasserversorgung mit der niedrigen NaCI-Konzentration durch die zehnte Einheit 10 für die Wasserversorgung mit einer NaCI-Konzentration von weniger als 30 g/l fortgesetzt. Das Wasser mit der hohen NaCI-Konzentration wird vom ersten Ausgang der fünften Einheit 5 zur Lösung des trockenen NaCl zum Eingang der neunten Einheit 9 für das Wassersediment geliefert. Die neunte Einheit 9 für das Wassersediment führt eine Pufferfunktion durch, um große Nach-Fraktionen, die sich noch nicht gelöst haben sowie wasserunlösliche Abfälle zu entfernen. Da das Wasser mit der hohen NaCl-Konzentration in der neunten Einheit 9 für das Wassersediment gesammelt wird, wird dieses Wasser vom ersten Ausgang zum Eingang der siebenten Einheit 7 für das Wassersediment geführt. In der siebenten Einheit 7 für das Wassersediment erfolgt die endgültige Sedimentation der in NaCl enthaltenen Dispersionseinschlüsse und dementsprechend der wasserunlöslichen Abfälle. Wenn das Wasser die höchste Ebene des Wasserstands in der siebenten Einheit 7 für das Wassersediment erreicht, kommt die Information über dieses Ereignis von ihrem Informationsschaltausgang zum zweiten Informationsschalteingang der ersten Einheit 1 für die Niveauautomatik und Programmsteuerung. Dementsprechend erarbeitet und sendet die erste Einheit 1 für die Niveauautomatik und Programmsteuerung von ihrem vierten Informationsschaltausgang an den Informationsschalteingang der Einheit für Wasserableitung mit der NaCI-Konzentration mehr als 50 g/l einen Befehl über die Einschaltung dieser Einheit. Vom zweiten Ausgang der siebenten Einheit 7 für das Wassersediment kommt das Wasser mit der hohen NaCI-Konzentration an den Eingang der achten Einheit 8 für die Wasserableitung mit einer NaCI-Konzentration von mehr als 50 g/l ein. Danach wird dieses Wasser von ihrem Ausgang an den Eingang des Behälters 6 mit Waschwasser geliefert. Wenn das oben genannte Wasser die untere Ebene des Wasserstands in der siebten Einheit 7 für das Wassersediment erreicht, wird die Information über dieses Ereignis von ihrem Informationsschaltausgang auf den dritten Informationsschalteingang der ersten Einheit 1 für die Niveauautomatik und Programmsteuerung übertragen. Ihrerseits überträgt die erste Einheit 1 für die Niveauautomatik und Programmsteuerung vom vierten Informationsschaltausgang einen Befehl zum Informationsschalteingang der achten Einheit 8 für Wasserableitung mit einer NaCI-Konzentration von mehr als 50 g/l über ihre Abschaltung. Vom Informationsschaltausgang des Behälters 6 mit Waschwasser wird kontinuierlich die Information über die NaCI-Konzentration in seinem Wasser dem dritten Informationsschalteingang der ersten Einheit für die Niveauautomatik und Programmsteuerung zugeführt.

Nach dem Erreichen des Sollwerts von NaCl im Wasser des Behälters 6 mit Waschwasser überträgt die erste Einheit 1 für die Niveauautomatik und Programmsteuerung von ihrem Informationsschaltausgang einen Befehl auf die Informationsschalteingänge der achten Einheit 8 für die Wasserableitung mit einer NaCI-Konzentration von mehr als 50 g/l und der zehnten Einheit 10 für die Wasserversorgung mit einer NaCI-Konzentration von weniger als 30 g/l sowie vom zweiten Informationsschaltausgang auf den Eingang des Förderers 3 über das Halten ihres Betriebs.

Die Unterstützung der erforderlichen NaCI-Konzentration im Waschwasser während der Wiederherstellung der Zeolithfilter fördert die Verringerung der Waschzeit und erhöht das Zeitintervall für ihre Wartung, was durch Vergleichstests mit der Prototypvorrichtung, die in der Tabelle 6 dargestellt sind, bestätigt wird.

**Tabelle 6**

| Nr. | Vorrichtungsbenennung | Waschwasserumfang, m³ | Ammoniumstickstoffkonzentration im Wasser der Einheit für Ammoniumstickstoffentfernung, mg/l | | | | | |
|---|---|---|---|---|---|---|---|---|
| | | | 6 Min. | 12 Min. | 18 Min. | 24 Min. | 30 Min. | 36 Min. |
| 1 | vorgeschlagene Vorrichtung | 60 | 221 | 281 | 293 | 403 | 474 | 474 |
| 2 | Prototypvorrichtung | 60 | 221 | 233 | 237 | 248 | 256 | 267 |

Wie aus den Ergebnissen der Vergleichstests der vorgeschlagenen Vorrichtung mit der Prototypvorrichtung hervorgeht, die in der Tabelle 6 dargestellt sind, gewährleistet die vorgeschlagene Vorrichtung das Erreichen des technischen Ergebnisses. In der vorliegenden Vorrichtung ist die aus Zeolith ausgefallene Menge Ammoniumstickstoff in 36 Minuten 1,78mal größer als die für die gleiche Zeit in der Prototypvorrichtung geltende Menge des Ammoniumstickstoffs (mit dem gleichen Umfang des Waschwassers).

Folglich kostet es weniger Zeit, um das Zeolith in der beanspruchten Vorrichtung wiederherzustellen.

Die Umsetzung der vorgeschlagenen Vorrichtung kann unter Verwendung von Materialien, Anordnungen und Komponenten, die aus dem Stand der Technik bekannt sind, durchgeführt werden.

### Bezugszeichenliste

- 1: Erste Einheit für Niveauautomatik und Programmsteuerung
- 2: Zweite Einheit für trockenes NaCl
- 3: Förderer
- 4: Umwälzpumpe
- 5: Fünfte Einheit zur Lösung des trockenen NaCl
- 6: Sechste Einheit für Ammoniumstickstoffentfernung aus dem Waschwasser der Zeolithfilter
- 7: Siebente Einheit für das Wassersediment
- 8: Achte Einheit für die Wasserableitung mit der NaCI-Konzentration von mehr als 50 g/l
- 9: Neunte Einheit für das Wassersediment
- 10: Wasserversorgungspumpe mit der NaCI-Konzentration von weniger als 30 g/l
- 11: Einheit für die Sedimentfraktionsentfernung
- 12: Einheit für die Sedimentfraktionsbewegung
- 13: Erster Verschluss
- 14: Zweiter Verschluss
- 15: Dritter Verschluss

## Patentansprüche

1. Vorrichtung zur Stabilisation der NaCI-Konzentration im Wasser der Einheit für die Ammoniumstickstoffentfernung aus dem Waschwasser von Zeolithfiltern, die mit einer ersten Einheit (1) für die Niveauautomatik und Programmsteuerung gebildet ist,
die einen IBM-PC-kompatiblen Computer mit einem auf ihm installierten Programm für elektronische Datenverarbeitungsanlagen "Steuerungsprogram für Wasserparameter in USV" enthält,
die mit drei Informationsschalteingängen und mit vier Informationsschaltausgängen und mit einer zweiten Einheit (2) für trockenes NaCl ausgestattet ist, die mit einem Ausgang, einem Informationsschalteingang und einem Informationsschaltausgang und einem Förderer (3) ausgestattet ist,
die mit einem Eingang, einem Ausgang und einem Informationsschalteingang und mit einer Umwälzpumpe (4) ausgestattet ist,
die mit einem Eingang, einem Ausgang und einem Informationsschalteingang und mit einer fünften Einheit (5) zur Lösung des trockenen NaCl ausgestattet ist,
die mit einem ersten, zweiten und dritten Ausgang, einem ersten, zweiten und dritten Eingang und einem Informationsschaltausgang und einem Behälter (6) mit Waschwasser ausgestattet ist,
die mit einem Eingang, einem Ausgang und einem Informationsschaltausgang und einer siebten Einheit (7) für das Wassersediment ausgestattet ist,
die mit einem Eingang, einem ersten und zweiten Ausgang und einem Informationsschaltausgang und einer achten Einheit (8) für die Wasserableitung mit einer NaCI-Konzentration von mehr als 50 g/l ausgestattet ist,
die mit einem Eingang, einem Ausgang und einem Informationsschalteingang und einer neunten Einheit (9) für das Wassersediment ausgestattet ist,
die mit einem Eingang, einem ersten und zweiten Ausgang und einem Informationsschaltausgang und einer Wasserversorgungspumpe (10) mit einer NaCl-Konzentration von weniger als 30 g/l ausgestattet ist,
die mit einem Eingang, einem Ausgang und einem Informationsschalteingang und einer elften Einheit (11) zur Sedimentfraktionsentfernung ausgestattet ist, die mit einem Eingang und einem Ausgang und einer zwölften Einheit (12) für die Sedimentfraktionsbewegung ausgestattet ist,
die mit einem Eingang, einem Ausgang und einem Informationsschalteingang und einem ersten Verschluss (13) ausgestattet ist,
die mit einem Eingang, einem Ausgang und einem Informationsschalteingang und einem zweiten Verschluss (14) ausgestattet ist,
die mit einem Eingang, einem Ausgang und einem Informationsschalteingang und einem dritten Verschluss (15) ausgestattet ist,
die mit einem Eingang, einem Ausgang und einem Informationsschalteingang ausgestattet ist, wobei der erste Eingang der ersten Einheit (1) für die Niveauautomatik und Programmsteuerung mit einem Informationsschaltausgang der zweiten Einheit (2) für trockenes NaCl verbunden ist, der zweite Informationsschalteingang der ersten Einheit (1) für die Niveauautomatik und Programmsteuerung mit den Informationsschaltausgängen der fünften Einheit (5) zur Lösung des trockenen NaCl, der siebenten Einheit (7) für das Wassersediment und der neunten Einheit (9) für das Wassersediment verbunden ist, der dritte Informationsschalteingang der Einheit für die Niveauautomatik und Programmsteuerung mit dem Informationsschalteingang des Behälters (6) mit dem Waschwasser verbunden ist, der erste Informationsschaltausgang der ersten Einheit (1) für die Niveauautomatik und Programmsteuerung mit dem Informationsschalteingang der zweiten Einheit (2) für trockenes NaCl verbunden ist, der zweite Informationsschaltausgang der ersten Einheit (1) für die Niveauautomatik und Programmsteuerung mit dem Informationsschalteingang des Förderers 3 verbunden ist, der dritte Informationsschaltausgang der ersten Einheit (1) für die Niveauautomatik und Programmsteuerung mit den Informationsschalteingängen der Umwälzpumpe (4), der neunten Einheit (9) für das Wassersediment, einer zwölften Einheit (12) für Sedimentfraktionsbewegung des ersten Verschlusses (13), des zweiten Verschlusses (14) und des dritten Verschlusses (15) verbunden ist, der vierte Informationsschaltausgang der ersten Einheit (1) für die Niveauautomatik und Programmsteuerung mit den Informationsschalteingängen der achten Einheit (8) für die Wasserableitung mit einer NaCl-Konzentration von 50 g/l und der Wasserversorgungspumpe mit einer NaCl-Konzentration von weniger als 30 mg/l verbunden ist, der Ausgang der zweiten Einheit (2) für trockenes NaCl mit dem Eingang des Förderers 3 verbunden ist, der Ausgang des Förderers 3 mit dem zweiten Eingang der fünften Einheit (5) zur Lösung des trockenen NaCl verbunden ist, der erste Eingang der fünften Einheit (5) zur Lösung des trockenen NaCl mit dem Ausgang der Umwälzpumpe (4) verbunden ist, deren Eingang mit dem dritten Ausgang der fünften Einheit (5) zur Lösung des trockenen NaCl verbunden ist, der zweite Ausgang der fünften Einheit (5) zur Lösung des trockenen NaCl mit dem Eingang des dritten Verschlusses (15) verbunden ist, der erste Ausgang der fünften Einheit (5) zur Lösung des trockenen NaCl mit dem Eingang der neunten Einheit für das Wassersediment verbunden ist, der dritte Eingang der fünften Einheit (5) zur Lösung des trockenen NaCl mit dem Ausgang der Wasserversorgungspumpe (10) mit einer NaCI-Konzentration von weniger als 30 mg/l, deren Eingang mit dem Ausgang des Behälters (6) mit dem Waschwasser verbunden ist, der Eingang des Behälters (6) mit Waschwasser mit dem Ausgang der achten Einheit (8) für die Wasserableitung mit einer NaCI-Konzentration von mehr als 50 g/l verbunden ist, der erste Ausgang der neunten Einheit (9) für die Wasserableitung mit dem Eingang der siebenten Einheit (7) für das Wassersediment verbunden ist, deren erster Ausgang mit dem Eingang des ersten Verschlusses (13) verbunden ist, und der zweite Ausgang mit dem Eingang der achten Einheit (8) für die Wasserableitung mit einer NaCI-Konzentration von mehr als 50 g/l verbunden ist, der zweite Ausgang der neunten Einheit (9) für das Wassersediment mit dem Eingang des zweiten Verschlusses (14) verbunden ist, der Ausgang des ersten Verschlusses (13), der Ausgang des zweiten Verschlusses (14) und der Ausgang des dritten Verschlusses (15) mit dem Eingang der zwölften Einheit (12) für die Sedimentfraktionsbewegung verbunden sind, deren Ausgang mit dem Eingang der elften Einheit (11) zur Sedimentfraktionsentfernung verbunden ist, und der Ausgang der elften Einheit (11) für die Sedimentfraktionsentfernung auf eine Entsorgung gerichtet ist.
